Europäisches Patentamt

European Patent Office

Office européen des brevets

(19)

(11) EP 0 842 992 B1

(12) **EUROPEAN PATENT SPECIFICATION**

(45) Date of publication and mention
of the grant of the patent:
**07.05.2003 Bulletin 2003/19**

(51) Int Cl.[7]: **C09D 5/02**, C09D 7/12,
C08F 265/02, C08F 265/06,
C09D 151/00

(21) Application number: **97308901.4**

(22) Date of filing: **06.11.1997**

(54) **Low gloss coating composition**

Beschichtungsmasse mit niedrigem Glanz

Composition d'enduction à faible brillance

(84) Designated Contracting States:
**AT DE FI FR GB IT NL**

(30) Priority: **15.11.1996 US 31004 P**

(43) Date of publication of application:
**20.05.1998 Bulletin 1998/21**

(73) Proprietor: **ROHM AND HAAS COMPANY
Philadelphia, Pennsylvania 19106-2399 (US)**

(72) Inventors:
• **Blankenship, Robert Mitchell
Harleysville, Pennsylvania 19438 (US)**
• **Brown, James Tinney
Bechtelsville, Pennsylvania 19505 (US)**

• **Ruggio, Michael Joseph
Ambler, Pennsylvania 19002 (US)**

(74) Representative: **Buckley, Guy Julian et al
ROHM AND HAAS (UK) LTD.
European Operations Patent Department
Lennig House
2 Mason's Avenue
Croydon CR9 3NB (GB)**

(56) References cited:
**EP-A- 0 179 597       EP-A- 0 244 250
EP-A- 0 342 283       US-A- 3 930 101
US-A- 4 191 672       US-A- 5 283 129
US-A- 5 510 422**

EP 0 842 992 B1

**Description**

**FIELD OF INVENTION**

The present invention relates to a low gloss coating composition useful for improving the print quality of inks applied onto the low gloss coating composition.

**BACKGROUND**

Obtaining good print quality on substrates coated with low gloss compositions, such as paper or paper board, has been difficult. For example, it has been a problem to obtain an adequate difference between the gloss of the coating on the substrate and gloss of ink applied to the coated substrate. This difference in gloss between the ink and coated substrate is referred to as delta gloss. A large delta gloss helps the ink applied to the low gloss coated substrate visually standout. It has also been difficult when applying ink to a low gloss coated substrate to obtain uniform density and gloss of ink on all areas of the substrate where ink is applied. These variations in the density and gloss of ink on the substrate is referred to herein as "mottle". Another problem commonly encountered on low gloss coated substrates is that the ink applied to the substrate tends to penetrate into the low gloss coating, resulting in poor ink gloss and delta gloss. The resistance of the coating composition to ink penetration is referred to herein as "ink holdout". Such properties as delta gloss, mottle, and ink holdout, can be used to qualitatively and quantitatively measure print quality. Low gloss coated substrates where print quality problems occur frequently include any coated substrate where the surface has a 75° sheet gloss of 50 percent or less. Low gloss coated substrates include for example paper; paper board; paper products used for newspapers, advertisements, posters, books or magazines; and building substrates such as wall paper, wall board, or ceiling tile. In the paper industry, examples of low gloss coated substrates include silk, matte and dull paper grades.

Others have attempted to improve the print quality on low gloss coated substrates through various techniques. For example, others have tried to improve print quality by formulating low gloss compositions with particular blends of clays, carbonates, specialty pigments such as talc or alumina; or with specialty binders, such as highly carboxylated styrene/butadiene latexes. Another approach has been to use special calendering techniques to improve print quality. However, improvements in print quality, particularly delta gloss, using these techniques have tended to be less than desired.

US Patent No. 5,283,129 to Renk, et. al, hereinafter referred to as "Renk", discloses a low gloss coating composition for light weight paper containing delaminated clay, calcined clay, whitening pigment, starch binder, starch crosslinking agent and lubricant. Renk discloses that the whitening pigment can be partially replaced with hollow core plastic pigments primarily for increasing the opacity of the paper. Although it is disclosed that the plastic pigments also assist in increasing ink gloss, experience shows, as detailed hereinafter, that delta gloss is only slightly improved because the plastic pigments also contribute to increasing the sheet gloss of the coating composition upon calendering.

US Patent No. 5,510,422 to Blankenship, et. al, hereinafter referred to as "Blankenship", discloses the use of certain core and shell polymer particles, which contain at least one core phase having at least one void, at least one shell phase encasing the core, and at least one channel, where the channel connects the void to the exterior of the particles. These particles are disclosed to be useful as opacilfying agents in coatings. However, Blankenship does not disclose either the use of these core and shell particles in low gloss coating compositions or their use in any coating composition to improve delta gloss.

EP-A-0244250 discloses a synthetic paper coating composition comprising a carboxylated latex, the carboxylation being such that the latex swells substantially during the preparation of the coating composition and shrinks during the drying of the coated paper to produce microscopic roughness on the dried coated paper surface. A low sheet gloss, high ink gloss coated paper is obtained.

It is desirable to provide a low gloss coating composition which improves the print quality of ink applied to a substrate coated with the low gloss composition. This invention addresses this problem by incorporating into low gloss compositions certain polymer particles having at least one opening from the exterior into the interior of the particle. It is unexpected that these particles improve print qualities such as delta gloss in a low gloss composition.

STATEMENT OF THE INVENTION

The present invention provides a low gloss coating composition comprising: one or more polymer particles; and one or more pigments; wherein the polymer particles comprise at least one polymer core phase containing at least one void; at least one polymer shell phase at least partially surrounding the core; and at least one channel connecting the void in the core phase to the exterior of the particle; wherein the coating composition comprises from 1.0 part by weight to 50 parts by weight of the polymer particles per 100 parts of the pigment, and wherein the coating composition has a 75° sheet gloss of 50 percent or less.

**DETAILED DESCRIPTION**

The low gloss coating composition of the present invention has a 75° sheet gloss of 50 percent or less; preferably from 7 percent to 50 percent; more preferably from 10 percent to 40 percent, and most preferably from 15 percent to 35 percent. As used herein, "75° sheet gloss" means the gloss measured at a 75° angle to a sheet coated with the low gloss coating composition.

By "polymer particles" we mean particles having a certain morphology. The polymer particles contain at least one opening in the exterior of the particle which is connected to the interior of the particle by a channel. More particularly, the polymer particles contain at least one void, at least one core phase, at least one shell phase, and at least one channel, where the core phase surrounds the void, the shell phase at least partially encases the core, and the channel connects the exterior of the particle to the void. By "unruptured polymer particles" or "swellable polymer particles", we mean particles which can be modified to form the polymer particles useful in the present invention.

The polymer particles are present in the low gloss coating composition in an amount of from 1 part by weight to 50 parts by weight, more preferably from 2 parts by weight to 20 parts by weight, and most preferably from 3 parts by weight to 15 parts by weight based on 100 parts by weight pigment in the composition.

The polymer particles can be prepared by emulsion polymerization techniques well known to those skilled in the art. Preferably, multi-stage sequential emulsion polymerization techniques are used to form swellable polymer particles which are then treated to form the polymer particles useful in the present invention.

For example, the polymer particles useful in the present invention can be produced by the method disclosed in U.S. Patent No 4,985,064. In U.S. Patent No. 4,985,064, multi-stage polymer particles are swollen with solvent. If the multi-stage particles contain a sufficient amount of acid or base, the particles, with suitable properties, such as shell thickness and shell permeability, will phase separate under neutralization, to form the polymer particles.

The polymer particles can also be produced from swellable polymer particles, which when swelled, "rupture" to form voids and channels in the particles. Multi stage sequential emulsion polymerization techniques for making these swellable polymer particles are disclosed in U.S. Patent Nos. U.S. 4,427,836; 4,920,160; 4,594,363; 4,469825; and 4,468,498; 4,880,842; 5,157,0845; 5,041,464; 5,036,109; and 5,409,776. These polymerization methods can be modified to form swellable polymer particles which will rupture upon swelling so as to produce the polymer particles of the present invention.

Preferably, the swellable polymer particles are formed by preparing at least one polymer core which is swellable; encasing, either partially or completely the swellable core in at least one shell polymer; and contacting the polymer particles with a swelling agent which can permeate the shell and swell the core. The core is swelled in a controlled fashion to form at least one void in the core and to "rupture" the particle so that one or more channels form to connect the void to the exterior of the particle. The swelling of the polymer particles to form the voids or channels can be performed before or after the polymer particles are added to the low gloss coating composition.

While the polymer core phase may be made in a single stage or step of the sequential polymerization and the polymeric shell phase may be the product of a single sequential stage or step following the core stage, the making of the polymer core phase may involve a plurality of steps in sequence followed by the making of the polymer shell phase which may involve a series of sequential steps as well. The molecular weight of the polymer formed in a given stage may range from 100,000, or lower if a chain transfer agent is used, to several million.

The first stage in making the polymer particles useful in the present invention optionally may be the preparation of a seed polymer containing small dispersed polymer particles insoluble in the aqueous emulsion polymerization medium. This seed polymer, may or may not be swellable and provides particles which form the nuclei on which the core phase is formed.

The polymer core phase is preferably formed from the aqueous emulsion polymerization of one or more monoethylenically unsaturated monomers. Examples of suitable monoethylenically unsaturated monomers include styrene, vinyltoluene, ethylene, vinyl acetate, vinyl chloride, vinylidene chloride; acrylonitrile, acrylamide, methacrylamide, and various $(C_1-C_{20})$ alkyl, $(C_1-C_{20})$ hydroxyalkyl, or $(C_3-C_{20})$ alkenyl esters of (meth)acrylic acid, such as methyl methacrylate, methyl acrylate, ethyl acrylate, ethyl methacrylate, butyl acrylate, butyl methacrylate, 2-ethylhexyl acrylate, 2-ethylhexyl methacrylate, benzyl acrylate, benzyl methacrylate, lauryl acrylate, lauryl methacrylate, palmityl acrylate, palmityl methacrylate, stearyl acrylate, stearyl methacrylate, hydroxyethyl acrylate, hydroxyethyl methacrylate, acrylic acid, methacrylic acid, itaconic acid, aconitic acid, maleic acid, maleic anhydride, fumaric acid, crotonic acid, acryloxypropionic acid, methacryloxypropionic acid, acryloxyacetic acid, methacrylic anhydride, methacryloxyacetic acid, monomethyl acid maleate, monomethyl acid itaconate, monomethyl fumarate or combinations thereof. As used herein, "(meth)acrylic" means acrylic or methacrylic and "(meth)acrylate" means acrylate or methacrylate.

At least one core phase is swellable using techniques known to those skilled in the art. Preferably, the core is susceptible to swelling through the use of a swellable compound which is incorporated into the core by techniques such as absorption, encapsulation, or polymerization. For example, the swellable compound may be a functional monomer which is polymerized as all or part of the core phase and which is susceptible to swelling. Functional monomers include for example monoethylenically unsaturated compounds containing groups susceptible neutralization such as acid or base, or groups susceptible to hydrolysis. The swellable compound may also be a nonpolymerizable compound which is incorporated into the polymer particle through techniques such as absorption or encapsulation and is susceptible to neutralization or hydrolysis. Preferably, the amount of swellable compound in the polymer particle should be at least 0.5 weight percent, more preferably from 1 weight percent to 70 weight percent based on the total weight of the unswollen polymer particle.

If a functional monomer is used as the swelling compound preferably the core contains at least 5 mole percent of the functional monomer based on total moles of monomer in the core phase. More preferably, the core phase contains at least 10 mole percent; and most preferably from 30 mole percent to 60 mole percent of a functional monomer based on total moles of monomer in the core phase.

Examples of functional monomers include for example acid containing monomers such as acrylic acid, methacrylic acid, itaconic acid, aconitic acid, maleic acid, maleic anhydride, fumaric acid, crotonic acid, acryloxypropionic acid, methacryloxypropionic acid, acryloxyacetic acid, methacrylic anhydride, methacryloxyacetic acid, monomethyl acid maleate, monomethyl acid itaconate, monomethyl fumarate, vinyl sulfonic acid, acrylamidopropanesulfonic acid, or combinations thereof; base containing monomers such as vinyl pyridine, 2-(dimethylamino)ethyl (meth)acrylate, 2-(tert-butylamino)ethyl (meth)acrylate, 3-(dimethylamino)propyl (meth)acrylamide, 2-(diethylamino)ethyl (meth)acrylate, 2-(dimethylamino)ethyl (meth)acrylamide; or hydrolyzable monomers such as $C_1$ to $C_{16}$ alkyl (meth)acrylate esters, including methyl methacrylate, ethyl acrylate, butyl acrylate, hexyl acrylate, 2-hydroxyethylacrylate, or vinyl esters such as vinyl acetate, vinyl propionate, vinyl butyrate, vinyl pivalate, vinyl laurate, or vinyl decanoate or combinations thereof. Preferably, the functional monomer is an acid or base functional monomer, and most preferably is an acid functional monomer.

If the swellable compound is a nonpolymerizable compound, preferably the polymer particle contains from 0.5 weight percent to 70 weight percent, more preferably from 1 weight percent to 30 weight percent and most preferably from 5 weight percent to 20 weight percent of the nonpolymerizable compound based on the total weight of the unswollen polymer particle. Suitable nonpolymerizable compounds include for example base or acid containing compounds such as $C_6$ to $C_{12}$ aliphatic or aromatic carboxylic acids, or $C_6$ to $C_{12}$ aliphatic or aromatic amines, and hydrolyzable compounds.

The core phase, whether obtained by a single stage process or a process involving several stages, preferably has an average particle size of from 20 nanometers to 1000 nanometers, and more preferably from 100 nanometers to 500 nanometers in unswollen condition. If the core is obtained from a seed polymer, the seed polymer preferably has an average particle size in the range of from 20 nanometers to 200 nanometers.

After the core phase is obtained, a subsequent stage or stages of emulsion polymerization is effected to form a polymer shell phase on the core phase. The shell phase at least partially encases or surrounds the core phase. Preferably the shell phase completely surrounds the core phase.

One or more monomers are polymerized to form the shell phase on the core phase. Preferably the monomers are any of the monoethylenically unsaturated monomers mentioned hereinbefore for making the core phase. More preferably the shell phase comprises one or more ($C_1$-$C_{20}$) alkyl, ($C_1$-$C_{20}$) hydroxyalkyl, or ($C_3$-$C_{20}$) alkenyl esters of (meth)acrylic acid. It is also more preferable that the shell phase is a copolymer containing two or more different monomers.

The amount and type of monomer polymerized in the shell phase should permit the core to swell and allow the shell to form the channel connecting the void to the exterior of the particle with swelling. The shell phase should preferably have a glass transition temperature (Tg) of from -40°C to 105°C, more preferably from - 10°C to 105°C, and most preferably from 35°C to 80°C. The polymer particle in an unswollen state, preferably has a weight ratio of core polymer to shell polymer from 1:1 to 1:20, preferably from 1:1 to 1:10; and most preferably from 1:2 to 1:8.

Monomeric mixtures for making the shell phase also preferably contains less than 15 mole percent, and more preferably from 0.1 mole percent to 8 mole percent of functional monomer, based on the total moles of monomer in the shell phase. The presence of some functional monomer in the shell phase promotes permeability of the shell to the swelling agent.

Any of the polymer stages may optionally contain polyethylenically unsaturated monomers such as ethyleneglycol di(meth)acrylate, allyl (meth)acrylate, diethyleneglycol di(meth)acrylate, 1,3-butanediol di(meth)acrylate; diethyleneglucol di(meth)acrylate, trimethylolpropane trimethacrylate, or divinylbenzene. The amount of polyethylenically unsaturated monomers is preferably from 0 to 15 mole percent and most preferably from 0 to 3 mole percent based on the total moles of monomer in the polymer stage.

The average particle size of the polymer particle after swelling is from 100 nanometers to 4500 nanometers, preferably from 150 nanometers to 2500 nanometers, and more preferably from 200 to 2000 nanometers and most preferably from 300 to 1500 nanometers.

The water uptake of the polymer particles is preferably from 0.1 to 4.0 grams water per grams polymer particles, and more preferably from 0.2 to 3.0 grams water per grams polymer particles.

Once the particles are formed, the particles are swollen by contacting the particles with a swelling agent. Depending on the type and amount of swelling compound in the core, the time of exposure to the swelling agent is from about 0.5 hours to 24 hours. The swelling agent causes the core to swell to form at least one void in the core phase and one or more channels connecting the void to the exterior of the particle. During this swelling step, it has been found that the polymer particles can most effectively be formed if the concentration of the particles in the aqueous medium is preferably from 15 to 35 weight percent, and more preferably from 15 to 25 weight percent. It is preferred that the amount of swelling agent added be enough to completely neutralize or hydrolyze, as the case may be, the swelling compound in the core phase.

The swelling agent chosen must be capable of interacting with the swelling compound to swell the core. If the core is completely surrounded by the shell polymer, the swelling agent must also be capable of permeating the shell either independently or in the presence of another compound which aids permeation. For example, if an acid functional monomer or acid nonpolymerizable compound is incorporated into the core, an organic or inorganic base may be used to swell the core. If a base functional monomer or base nonpolymerizable compound is incorporated into the core, an organic or inorganic acid may be used to swell the core. If a hydrolyzable functional monomer or hydrolyzable nonpolymerizable compound is incorporated into the core, an aqueous inorganic acid or base may be used to swell the core. Examples of swelling agents which can be used include any base in a gaseous or aqueous media such as ammonia, amines, sodium hydroxide, potassium hydroxide, lithium hydroxide or combinations thereof; or acids in a gaseous or aqueous media such as formic acid, acetic acid or combinations thereof.

Factors which can effect the swelling and formation of the polymer particles include for example thickness of the shell, "softness" of the shell, amount of swelling compound in the core, permeability of the shell to the swelling agent, and exposure time and temperature of the particles to the swelling agent. These variables can be altered to promote swelling and formation of the void and channel within the polymer particle. For example, if the glass transition temperature (Tg) of the core or shell is above standard ambient temperature, it may be necessary to heat the polymer particles above their Tg, or to add a solvent to soften the polymer particles, to effect swelling. Also, as the amount of swelling compound is increased in the core, less time will be needed to swell the particle. If the amount of swelling compound is low in the core, the temperature during swelling can be increased to facilitate swelling. The degree of swelling is also dependent on the hardness of the shell in that as the shell hardness is increased, the more difficult it is to swell the polymer particle.

In a preferred embodiment of the invention, the polymer particles are formed by the method disclosed in U.S. Patent No. 5,510,422 to Blankenship, et. al. These particles are produced by forming a core containing an acid functional monomer, completely encapsulating the core in a shell polymer which is permeable to a base swelling agent, and contacting the resulting polymer particle with an aqueous or gaseous base swelling agent to form a void and rupture the particle in a controlled fashion.

In this preferred embodiment, the core phase contains at least 5 mole percent, more preferably at least 10 mole percent; and most preferably from 30 mole percent to 60 mole percent of the acid functional monomer based on total moles of monomer in the core phase. Preferred acid functional monomers are acrylic acid, methacrylic acid, maleic acid, maleic anhydride, or vinyl sulfonic acid.

In addition to the specially shaped polymer particles, the low gloss coating composition contains pigment. The type and amount of pigment is chosen to provide a formulation having a 75° sheet gloss of 50 or less.

The pigment in the coating composition imparts to the coating such properties as smoothness, low gloss, brightness, and opacity. The pigment is preferably added to the coating composition at a level of 70 parts by weight to 99 parts by weight, more preferably from 80 parts by weight to 90 parts by weight per 100 parts of dry coating composition.

The pigment is preferably inorganic and includes for example clays ranging from fine to coarse in particle size; calcined clay; carbonates such as ground or precipitated calcium carbonate; titanium dioxide; low gloss grade specialty pigments such as talc, silica, aluminum silicate, hydrated alumina, aluminum trihydrate; or combinations thereof. Preferred pigments are clays, carbonates or combinations thereof.

The low gloss coating composition may also contain other components such as binder, solvent, water, and other additives common to low gloss coating compositions. The amounts and types of components and additives are selected according to techniques well known to those skilled in the art to provide a composition having a 75° sheet gloss of 50 or less.

Binder is typically added to the low gloss coating composition to provide adhesive and cohesive strength. The binder is preferably added to the coating composition in an amount of 4 parts by weight to 30 parts by weight, more preferably from 6 parts by weight to 25 parts by weight, and most preferably from 7 parts by weight to 21 parts by weight based on 100 parts pigment in the coating composition. The binder may be natural or synthetic. Natural binders include for example starch, modified starch, casein, or soybean protein. Synthetic binders include for example homopolymers or copolymers of ethylene, vinyl alcohol, vinyl acetate, styrene, (meth)acrylic acid, butadiene, or $C_1$ to $C_{12}$ alkyl (meth)acrylates esters; carboxymethyl cellulose; or combinations thereof. Preferred binders include copolymers of styrene and butadiene; styrene and acrylic acid; ethylene and vinyl acetate; and vinyl alcohol and vinyl acetate.

The coating composition preferably contains water, solvent or combinations thereof. The water or solvent is preferably added in an amount to provide 40 weight percent to 80 weight percent, more preferably from 45 weight percent to 75 weight percent, and most preferably from 50 weight percent to 70 weight percent solids based on the total weight of the composition. Solvents which may be used in the coating composition include for example aliphatic or aromatic hydrocarbons, or aliphatic or aromatic alcohols. Examples of solvent include hexane, pentane, hexanol, pentanol, xylene, toluene, benzene, mineral spirits and combinations thereof. Although the coating composition can be formulated using solvent, it is preferable for the coating composition to be aqueous.

The coating composition may optionally contain other additives well known to those skilled in the art such as dispersing agents; optical brighteners; insolubilizers; opacifying agents; rheology modifiers; lubricants; defoamers; corrosion inhibitors; antiwatering agents; pH adjusting agents; buffering agents; antioxidizing agents; or combinations thereof. These optional additives typically comprise from 0.01 to 10 parts by weight per 100 parts by weight pigment in the coating composition.

The low gloss coating composition is made by techniques well known to those skilled in the art. Preferably, a dispersion of pigment is prepared, followed by the addition binder, polymer particles, and other additives to achieve the desired solids, pH, and viscosity.

In one embodiment of the present invention, unswollen or unruptured polymer particles may be added to the low gloss composition before being modified to form the voids and channels in the particles. For example, unswollen polymer particles can be added to the composition and then contacted in the composition with a swelling agent to form voids and channels in the particles. Unruptured polymer particles, which have been partially swollen, can also be added to the composition and then contacted in the composition with a swelling agent to form the polymer particles.

The low gloss coating composition is useful for improving the print quality of ink applied to the low gloss composition. By "ink" we mean to include any coating applied to the low gloss composition which is different from the low gloss coating composition including coatings such as varnishes and paint. Print properties which can be improved include for example delta gloss, ink holdout, or mottle. Preferably, the polymer particles provide a change in delta gloss ($\Delta$ delta gloss) from a composition containing no polymer particles of at least 2.0, more preferably at least 2.5, and most preferably at least 3.2.

The low gloss coating composition may be applied to substrates which need a low gloss surface. Preferably, ink is then applied to portions of the coated substrate. For example, the ink can be printed onto the coated substrate to form images such as words or pictures. Substrates which may be coated include for example paper; paper board; paper products used for newspapers, advertisements, posters, books or magazines; and building substrates such as wall paper, wall board, or ceiling tile. Preferably the low gloss coating is used to coat paper, paperboard, or paper products.

The amount of low gloss coating composition applied to the substrate is generally from 0.15 $g/m^2$ to 45 $g/m^2$, more preferably from 1.5 $g/m^2$ to 30 $g/m^2$, and most preferably from 3.0 $g/m^2$ to 21 $g/m^2$.

The low gloss coating composition may be applied to the substrate by techniques well known to those skilled in the art. For example, the coating may be printed, sprayed, or applied with a roll applicator, blade coater, air knife, rod coater, or brush.

## EXAMPLES

Some embodiments of the invention will now be described in detail. In the examples, particle size measurements were obtained using a Brookhaven BI-90 Particle Sizer which employs a lightscattering technique. Sheet gloss and print gloss were measured at a 75° angle using a Technidyne T480 Glossmeter supplied by Technidyne located in New Albany, Indiana. The test method for measuring gloss was Tappi Test Method T-480 published in "Tappi Test Methods 1994-1995" by Tappi Press located in Atlanta, Georgia.

Also in the examples, the amount of core acid expelled and water uptake of the particles upon rupture was measured by centrifuging approximately 30 grams of the neutralized polymer particles with a Sorval table top centrifuge at 8,000 RPM for 1.5 hours. The supernatant liquid was poured off, and weighed. Also, the weight of the centrifuged polymer particles was obtained. The supernatant liquid was titrated with 0.5 N HCl using a Radiometer Automatic Titrator to determine the core acid expelled.

The core acid expelled (pKa around 6.5) was calculated by Equation 1:

$$\%\text{Core Acid Expulsed} = \left[\frac{\text{ml Titer} \times 0.5\text{N Acid}}{(\text{Theor. meq acid}) \times \text{g solids}}\right] \times 100$$

## Equation 1

where: "Theor. meq acid" is the theoretical milliequivalence of acid in the core in 1 gram of polymer particles, "g solids" is the grams of polymer solids after centrifuging.

The water uptake of the polymer particles was calculated by Equation 2:

$$\text{Water Uptake} = \frac{(((\text{g samp} - \text{g super}) - \text{g solids}) - (0.4 \times \text{g solids}))}{\text{g solids}}$$

## Equation 2

where: "g samp" is the grams of sample centrifuged, "g super" is the grams of supernatant liquid. "g solids" has the same meaning as in Equation 1.

The value of 0.4 in Equation 2 is an approximation of the correction for interstitial water in the plug. This was determined separately on a polymer of similar composition and particle size.

The following abbreviations are used in the Examples:

Table 1:

| Abbreviations | |
|---|---|
| **Abbreviation** | **Meaning** |
| BA | weight percent butyl acrylate |
| DI | Deionized |
| EA | weight percent ethyl acrylate |
| MAA | weight percent methacrylic acid |
| MMA | weight percent methyl methacrylate |
| nm | nanometers |
| pbw | parts by weight |
| SDS | sodium dodecyl benzene sulfonate |

Example 1 -- Synthesis of Core

A 5-liter flask equipped with paddle stirrer, thermometer, nitrogen inlet, and reflux condenser was charged with 1700 grams (g) of deionized water (DI water). The water was heated to 85°C under nitrogen atmosphere. Then 82 grams of a monomer emulsion was added to the flask. The monomer emulsion was prepared from 335 g DI water, 3.5 g of sodium dodecyl benzene sulfonate, 23 % active ingredient, (SDS), 364.5 g methyl methacrylate, and 4.35 g of methacrylic acid. After stirring the kettle for 5 minutes at 80 °C, a sodium persulfate solution of 2.75 g of sodium persulfate dissolved in 15 g of deionized water was added to the flask. The temperature of the reaction mixture was allowed to rise 1 to 2 °C. To the previously prepared monomer emulsion, an additional 7 g of SDS and 241 g of methacrylic acid were added. Ten minutes after the addition of the sodium persulfate solution to the flask, a linear gradual addition of the remaining monomer emulsion over 2 hours was begun. The temperature was held at 80°C during the monomer emulsion addition. Twenty minutes after the monomer addition was completed, the mixture was cooled to 25°C. The polymer was filtered through a 100 mesh screen. The filtered dispersion of polymer had a pH of 3.1, 22.27 weight percent solids, and an average particle diameter of 330 nm.

Example 2 -- Synthesis of Polymer Particles, 1:2 Core to Shell Weight Ratio

To a 5-liter flask equipped with paddle stirrer, nitrogen inlet, reflux condenser, and thermometer was added 400 grams DI water and 1526.7 grams of the core made in Example 1. The mixture was heated to 60°C under nitrogen atmosphere and then a 20 gram solution of iron sulfate (0.15 weight percent active) was added, followed by the addition of 1.2 grams of sodium persulfate dissolved in 100 grams of DI water. A monomer emulsion of 200 grams of DI water, 6 grams of SDS, 272 grams of ethyl acrylate, 397.8 grams of methyl methacrylate, and 10.2 grams of methacrylic acid was gradually added to the flask at a rate of 2.2 grams per minute. Concurrent with the addition of monomer emulsion was gradually added a solution of 2.8 grams of sodium bisulfite in 200 gram DI water, and a separate solution of 2.6 grams of sodium persulfate dissolved in 200 grams of DI water; each solution was added at a rate of 2.2 grams per minute. After 10 minutes into the monomer emulsion feed, the monomer emulsion feed was increased to 4.4 grams per minute, after twenty more minutes, the monomer emulsion feed rate was increased to 11.7 grams per minute. The temperature of the reaction mixture was maintained at 60°C throughout the addition of the monomer emulsion. At the completion of the feeds, the reaction mixture was held at 60 °C for fifteen minutes and then cooled to room temperature and filtered through a 100 mesh screen. The polymer product had 30.5 weight percent solids and an average particle size of 475 nm.

The resulting polymer product was swollen and "ruptured" by mixing 200 grams of the polymer product with 7.44 grams of ammonia (28 weight percent active) and 97.56 grams of deionized water. Half of this mixture was heated for 60 °C for one hour and the other half was held at room temperature for 24 hours. Both samples were analyzed for % core acid expelled and water uptake. The sample heated had 66 percent of its core acid expelled and had a water uptake of 2.22 grams water per grams polymer particles. The sample swelled at room temperature had 68 percent of its core material expelled and had a water uptake of 2.22 grams water per grams polymer particles.

Example 3 -- Synthesis of Polymer Particle with Core to Shell Ratio of 1:4

To the equipment in Example 2 was added 850 grams DI water and 954.2 grams of the core made in Example 1. The mixture was heated to 60°C under nitrogen atmosphere and then a 20 gram solution of iron sulfate (0.15 weight percent active) was added, followed by the addition of 1.2 grams of sodium persulfate dissolved in 100 grams of DI water. A monomer emulsion of 250 grams of deionized water, 5.25 grams of SDS, 340 grams of ethyl acrylate, 497.25 grams of methyl methacrylate, and 12.75 grams of methacrylic acid was gradually added to the flask at a rate of 2.2 grams per minute. Concurrent with the addition of monomer emulsion was gradually added a solution of 3.25 grams of sodium bisulfite in 250 grams DI water, and a separate solution of 3.25 grams of sodium persulfate dissolved in 250 grams of DI water; each solution was added at a rate of 1.9 grams per minute. After 10 minutes into the monomer emulsion feed, the monomer emulsion feed was increased to 4.4 grams per minute. After twenty more minutes, the monomer emulsion feed rate was increased to 9.4 grams per minute. The temperature of the mixture was maintained at 60°C throughout the addition of the monomer emulsion.. At the completion of the feeds, the mixture was held at 60 °C for fifteen minutes and was then cooled to room temperature and filtered through a 100 mesh screen. The polymer product 30.5 weight percent solids and an average particle size of 560 nanometers.

The resulting polymer product was swollen and ruptured by mixing 200 grams of the polymer product with 4.48 grams of ammonia (28 weight percent active) and 97.56 grams of DI water. Half of this mixture was heated for 60 °C for one hour and the other half was held at room temperature for 24 hours. Both samples were analyzed for % core acid expelled and water uptake. The sample heated had 59 percent of its core acid expelled and had a water uptake of 1.63 grams water per grams polymer particles. The sample swelled at room temperature had 46 percent of its core material expelled and had a water uptake of 1.17 grams water per grams polymer particles.

Examples 4-19

Polymer Particles were prepared similar to the process in Example 3 except that the monomer composition, weight ratio of the core to shell, core particle size, and overall particle size were varied. The core particle size was varied primarily by adjusting the surfactant level in the emulsion polymerization.

EP 0 842 992 B1

Table 2:

| Polymer Particle Compositions for Examples 4-19 | | | | | |
|---|---|---|---|---|---|
| Example | Core Composition | Shell Composition | Weight Ratio of Core: Shell | Core Particle Size (nm) | Swollen Particle Size (nm) |
| 4 | 60 MMA/40MAA | 40EA/58.5MMA/ 1.5 MAA | 1:4 | 355 | 869 |
| 5 | 70 MMA/30MAA | 40EA/58.5MMA/ 1.5 MAA | 1:4 | 347 | 825 |
| 6 | 35 MMA/65MAA | 40EA/58.5MMA/ 1.5 MAA | 1:4 | 261 | 560 |
| 7 | 98 MMA/2MAA | 40EA/58.5MMA/ 1.5 MAA | 1:4 | 410 | 700 |
| 8 | 60 MMA/40MAA | 40EA/58.5MMA/ 1.5 MAA | 1:4 | 377 | 868 |
| 9 | 60 MMA/40MAA | 65EA/33.5MMA/ 1.5 MAA | 1:8 | 377 | 1000 |
| 10 | 60 MMA/40MAA | 40EA/58.5MMA/ 1.5 MAA | 1:2 | 248 | 515 |
| 11 | 60 MMA/40MAA | 30EA/68.5MMA/ 1.5 MAA | 1:2 | 248 | 510 |
| 12 | 70 MMA/30MAA | 40EA/58.5MMA/ 1.5 MAA | 1:4 | 347 | 825 |
| 13 | 60 MMA/40MAA | 30BA/68.5MMA/ 1.5 MAA | 1:4 | 355 | 910 |
| 14 | 60 MMA/40MAA | 40EA/58.5MMA/ 1.5 MAA | 1:4 | 205 | 487 |
| 15 | 60 MMA/40MAA | 40EA/58.5MMA/ 1.5 MAA | 1:4 | 267 | 575 |
| 16 | 60 MMA/40MAA | 40EA/58.5MMA/ 1.5 MAA | 1:4 | 401 | 950 |
| 17 | 60 MMA/40MAA | 40EA/58.5MMA/ 1.5 MAA | 1:2 | 522 | 1080 |
| 18 | 60 MMA/40MAA | 40EA/58.5MMA/ 1.5 MAA | 1:4 | 522 | 1280 |
| 19 | 60 MMA/40MAA | 40EA/58.5MMA/ 1.5MAA | 1:4 | -- | 611* |

*Not swollen

The polymer particles useful in the present invention were evaluated in low gloss paper coatings for optical properties. The procedure used was as follows:

The polymer particles were formulated into low gloss paper coating compositions. Each low gloss paper coating composition was prepared by first making an aqueous slurry consisting of the inorganic pigments, deionized water, and dispersant shown in Table 3 below.

Table 3:

| Composition of Low Gloss Paper Coating | | | |
|---|---|---|---|
| | **Coating Composition (pbw)** | | |
| **Ingredients** | **A** | **B** | **C** |
| No.1 Clay (90-94% particles < 2 microns) | 47 | 0 | 75 |
| No. 2 Clay (80-84% particles < 2 microns) | 0 | 61 | 0 |
| $TiO_2$[1] | 7 | 0 | 0 |
| UltraFine Ground Calcium Carbonate[2] | 25 | 33 | 19 |
| Calcined Clay[3] | 15 | 0 | 0 |
| Deionized Water | balance | balance | balance |
| Acumer® 9000[4] | 0.2-0.3 | 0.2-0.3 | 0.2-0.3 |
| Test Polymer | 6 | 6 | 6 |
| Styrene Butadiene Latex[5] | 9 | 12.5 | 9 |
| Starch[6] | 12 | 3.5 | 12 |

[1] TiPure® R-900 supplied by DuPont
[2] Hydrocarb® 90 supplied by Omya Inc.
[3] Ansilex® 93 supplied by Engelhard
[4] Supplied by Rohm and Haas Company
[5] Dow-615, supplied by Dow Chemical Company
[6] Pengum 290 supplied by Pengum

Enough of deionized water was added to the aqueous pigment slurry to obtain $72 \pm 2$ weight percent solids. After the slurry was formed, the polymer to be evaluated, styrene butadiene latex and starch were added. The pH of each coating composition was adjusted to a pH of about 8 with aqueous ammonium hydroxide (28 weight percent active). Deionized water was then added to adjust the concentration of solids in each composition to between 52 and 58 weight percent solids.

For each coating composition in Table 3, a control composition, was prepared using the ingredients shown in Table 4:

Table 4:

| Control Coating Compositions | | | |
|---|---|---|---|
| **Ingredients** | **Control for A (pbw)** | **Control for B (pbw)** | **Control for C (pbw)** |
| No.1 Clay | 50 | 0 | 80 |
| No. 2 Clay | 0 | 65 | 0 |
| $TiO_2$ | 10 | 0 | 0 |
| UltraFine Ground Calcium Carbonate | 25 | 35 | 20 |
| Calcined Clay | 15 | 0 | 0 |
| Deionized Water | Balance | Balance | Balance |
| Acumer® 9000 | 0.2-0.3 | 0.2-0.3 | 0.2-0.3 |
| Styrene Butadiene Latex | 9 | 12.5 | 9 |
| Starch | 12 | 3.5 | 12 |
| Rhoplex® ASE-75 | 0 | 0.25 | 0 |

The control compositions were prepared by the same method used for making the coating compositions in Table 3, except that no Test Polymer was added. The ingredients were the same as those used in Table 3, except Rhoplex® ASE-75 was used which is supplied by Rohm and Haas.

The viscosity of the coating compositions were measured using a Brookfield LVF viscometer, spindle number 4, at 60 rpm. The compositions ranged in viscosity from about 1000 to about 6000 centipoises.

Each coating composition in Tables 3 and 4 was applied to a number of paper sheets having dimensions of about 23 cms by 30 cms in the following manner. The coating composition was drawn down by hand onto the paper sheet using typically a # 5 or #6 Meyer wire wound rod. The coating composition was applied to the paper sheet in an amount of about 14.8 g/m$^2$ of paper sheet. The coating composition was applied to the wire side of the paper sheet in the machine direction of the paper sheet. The wire wound rod was obtained from RDS, Inc. located in Webster, New York. The paper sheet was a typical North American freesheet base stock having a weight of about 61 g/m$^2$.

Each coated paper sheet was oven dried at 80°C for one minute and then conditioned overnight at about 22 °C and 50 percent humidity. The weight of the coating on the paper sheet was determined after overnight conditioning by subtracting the weight of the average of several uncoated paper sheets (of the same dimensions as the coated sheets) from the weight of the coated paper sheet. The several paper sheets closest to the target weight 14.8 g/ m$^2$ were evaluated further for optical properties.

The sheets selected were calendered, with one pass, at a rate of about 183 meters per minute using a laboratory calendering machine designed to simulate supercalendering conditions. The calendering was done at temperature of 52 °C and at a preselected pressure to produce a constant sheet gloss. After calendering, each sheet was evaluated for gloss.

Several sheet gloss measurements were taken in a line down the middle of each sheet. The gloss measurements for all of the selected sheets were averaged. The results of sheet gloss for the different coating compositions are reported in Table 6.

Delta gloss, the difference in gloss between a printed and unprinted area of a substrate was determined for each coating composition as follows. Several coated calendered sheets which had the closest average sheet gloss were cut in the center of the sheet to obtain a strip, 4.7 cm by 23 cm in dimensions. The strip was printed to cover all surface area with ink using a Prüfbau Printer, obtained from Prüfbau located in Munich, Germany. The settings on the Prüfbau printer were the following:

Table 5:

| Prüfbau Printer Settings | |
| --- | --- |
| Print speed | 0.5 meters /seconds |
| Pressure on form roll | 850 Newtons |
| Ink volume | 0.15 milliliters |
| Ink distribution on blanket roll | 45 seconds |
| ink distribution on form roll | 15 seconds |

The type of ink used was black heat set which was obtained from Wikoff located in Fort Mill, South Carolina. After printing, the strips were heat dried at about 50°C for 2 minutes. The strips were conditioned overnight at 22 °C and 50 percent humidity. The print gloss was measured at several locations down the center of the printed strip using the same procedure as was used for sheet gloss. The average print gloss for each coating composition is shown in Table 6.

The delta gloss was calculated by subtracting the average sheet gloss from the average print gloss. The greater the delta gloss value, the more contrast in gloss there is between the unprinted and printed areas of a sheet. The results of delta gloss for each of the compositions tested are shown in Table 6. The "Δ Delta Gloss" shown in Table 6 is the difference between the delta gloss of the coating composition containing the test polymer and the appropriate control composition.

TABLE 6:

| Gloss Properties of Coating Composition | | | | | | | |
| --- | --- | --- | --- | --- | --- | --- | --- |
| Example | Test Polymer from | Coating | Calender Pressure (kN/m)[7] | 75° Sheet Gloss | 75° Print Gloss | Delta Gloss | Δ Delta Gloss |
| 20(comp) | -- (control) | A | 171 | 36.1 | 72.3 | 36.2 | --- |

[7] Calender pressure measured in kilonewtons per meter.

TABLE 6:   (continued)

| Gloss Properties of Coating Composition | | | | | | | |
|---|---|---|---|---|---|---|---|
| Example | Test Polymer from | Coating | Calender Pressure (kN/m)[7] | 75° Sheet Gloss | 75° Print Gloss | Delta Gloss | Δ Delta Gloss |
| 21(comp) | Ropaque®[8] OP84 | A | 91 | 39.5 | 78.0 | 38.5 | 2.3 |
| 22(comp) | Ropaque HP91 | A | 72 | 39.3 | 77.5 | 38.2 | 2.0 |
| 23 | Example 4 | A | 143 | 33.3 | 74.9 | 41.6 | 5.4 |
| | | | | | | | |
| 24(comp) | -- (control) | B | 168 | 32.9 | 66.3 | 33.4 | --- |
| 25(comp) | Ropaque HP-543 | B | 54 | 34.8 | 71.3 | 36.5 | 3.1 |
| 26 | Example 4 | B | 138 | 34.6 | 73.5 | 38.9 | 5.5 |
| | | | | | | | |
| 27(comp) | -- (control) | C | 240 | 43.6 | 76.1 | 32.5 | -- |
| 28 | Example 4 | C | 252 | 39.1 | 76.8 | 37.7 | 5.2 |

[7] Calender pressure measured in kilonewtons per meter.

[8] registered trademark of Rohm and Haas Company.

Examples 20-28 in Table 6 show that low gloss coating compositions containing the polymer particles are effective in increasing the delta gloss of a substrate coated with the low gloss composition, in comparison to a substrate coated with the corresponding control, containing no test polymer. The results in Table 6 show that the polymer particles increase delta gloss in a variety of low gloss coating compositions.

Table 6 also shows that the polymer particles are more effective in increasing delta gloss in comparison to polymers which contain voids, but are not "ruptured", hereinafter referred to as "hollow sphere pigments". For Example, Ropaque OP-84, HP-91, and HP-543 in Table 6 (Comparative Examples 21, 22, and 25), are hollow sphere pigments, and showed lower delta gloss in comparison to Examples 23 and 26. The hollow sphere pigments are available from Rohm and Haas Company.

In addition to improvements in delta gloss, the results in Table 6 show that the low gloss coating compositions containing the polymer particles generally maintain or decrease sheet gloss which is developed during calendering, hereinafter referred to as "sheet gloss development", in comparison to the corresponding control.

Polymer particles of various acid content, shell composition, and particle size were evaluated in a low gloss composition for their effectiveness in improving delta gloss. The effect of delta gloss by varying these parameters is shown in Tables 7, 8, and 9. The procedure for measuring sheet gloss, print gloss, and delta gloss was the same as used for Examples 20-28. The coating composition used for the Examples in Tables 7-9 was Composition A shown in Table 3.

The results in Table 7 show that low gloss coating compositions containing polymer particles having different amounts of swelling compound in the core are effective in increasing the delta gloss of a substrate coated with the low gloss composition in comparison to a substrate coated with the control composition, containing no test polymer. Examples 30-31 and 33-34 in Table 7 also show that as the amount of acid functional monomer is increased in the core of the polymer particle, the delta gloss of the coating composition improves.

Table 7:

| Effect of Polymer Acid Content on Delta Gloss | | | | | | | | |
|---|---|---|---|---|---|---|---|---|
| Example | Polymer from Example: | Theor. Core Acid Content (pbw)[9] | %Core Acid Expelled | ( Water Uptake g Water/g polymer) | 75° Sheet Gloss | 75° Print Gloss | Delta Gloss | Δ Delta Gloss |
| 29(comp) | --(control) | -- | -- | -- | 30.3 | 66.4 | 36.1 | --- |
| 30 | Example 4 | 8 | 64.8 | 1.63 | 29.7 | 71.0 | 41.3 | 5.2 |
| 31 | Example 5 | 6 | 64.8 | 1.16 | 31.3 | 70.3 | 39.0 | 2.9 |
| | | | | | | | | |
| 32(comp) | -- (control) | -- | -- | -- | 28.2 | 60.5 | 32.3 | --- |
| 33 | Example 6 | 13 | -- | -- | 26.0 | 69.3 | 43.3 | 11.0 |
| 34 | Example 7 | 0.4 | ** | ** | 28.2 | 61.9 | 33.7 | 1.4 |

[9] Parts by acid monomer in core per 100 parts polymer particles

** Did not swell or expell acid.

The results in Table 8 show that low gloss coating compositions containing polymer particles having differing shell compositions are effective in increasing the delta gloss of a substrate coated with the low gloss composition in comparison to a substrate coated with the control composition, containing no test polymer. Examples 35-43 in Table 8 also show that polymer particles, having shell glass transition temperatures (Tg) ranging from 19 °C to 54 °C were effective in increasing the delta gloss of a substrate coated with Composition A in comparison to a substrate coated with Control Composition A.

Table 8:

| Effect of Shell Composition on Delta Gloss | | | | | | | |
|---|---|---|---|---|---|---|---|
| Example | Polymer from Example: | Tg Shell Composition | Tg Shell | 75° Sheet Gloss | 75° Print Gloss | Delta Gloss | Δ Delta Gloss |
| 35(comp) | -- (control) | -- | | 28.2 | 47.5 | 19.3 | --- |
| 36 | Example 8 | 40EA/ 58.5MMA/1.5 MAA | 44 | 31.2 | 56.4 | 25.2 | 5.9 |
| 37 | Example 9 | 65EA/ 33.5MMA/1.5 MAA | 19 | 24.5 | 49.8 | 25.3 | 6.0 |
| | | | | | | | |
| 38(comp) | --(control) | -- | | 32.9 | 65.3 | 32.4 | --- |
| 39 | Example 10 | 40EA/ 58.5MMA/1.5 MAA | 44 | 31.0 | 70.2 | 39.2 | 6.8 |
| 40 | Example 11 | 30EA/ 68.5MMA/1.5 MAA | 54 | 29.9 | 68.2 | 38.3 | 5.9 |
| | | | | | | | |
| 41(comp) | --(control) | -- | | 30.3 | 66.4 | 36.1 | --- |

Table 8: (continued)

| Effect of Shell Composition on Delta Gloss | | | | | | | |
|---|---|---|---|---|---|---|---|
| Example | Polymer from Example: | Tg Shell Composition | Tg Shell | 75° Sheet Gloss | 75° Print Gloss | Delta Gloss | Δ Delta Gloss |
| 42 | Example 12 | 40EA/ 58.5MMA/1.5 MAA | 44 | 31.3 | 70.3 | 39.0 | 2.9 |
| 43 | Example 13 | 308A/ 68.5MMA/1.5 MAA | 44 | 30.0 | 68.8 | 38.8 | 2.7 |

The results in Table 9 show that low gloss coating compositions containing polymer particles of varying particle size are effective in increasing the delta gloss of a substrate coated with the low gloss composition in comparison to a substrate coated with a control composition, containing no test polymer. Examples 44-51 in Table 9 show that polymer particles, having an average swollen particle size from 487 nm to 1280 nm were effective in increasing the delta gloss of Composition A in comparison to Control Composition A.

Table 9:

| Effect of Particle Size on Delta Gloss | | | | | | | | |
|---|---|---|---|---|---|---|---|---|
| Example | Test Polymer | Core Particle Size (nm) | Swollen Particle Size (nm) | Calen. Pres. (kN/m) | 75° Sheet Gloss | 75° Print Gloss | Delta Gloss | Δ Delta Gloss |
| 44(comp) | Control | -- | -- | 119 | 30.6 | 68.7 | 38.1 | --- |
| 45 | Example 14 | 205 | 487 | 191 | 31.8 | 76.3 | 44.5 | 6.4 |
| 46 | Example 15 | 267 | 575 | 108 | 30.3 | 72.1 | 41.8 | 3.7 |
| 47 | Example 4 | 377 | 869 | 96 | 29.7 | 72.6 | 42.9 | 4.8 |
| 48 | Example 16 | 401 | 950 | 91 | 29.6 | 70.7 | 41.1 | 3.0 |
| | | | | | | | | |
| 49(comp) | Control | -- | -- | 143 | 28.2 | 60.5 | 32.3 | --- |
| 50 | Example 4 | 377 | 869 | 131 | 28.8 | 69.5 | 40.7 | 8.4 |
| 52 | Example 17 | 522 | 1080 | 84 | 27.2 | 71.6 | 44.4 | 12.1 |
| 51 | Example 18 | 522 | 1280 | 131 | 28.6 | 66.7 | 38.1 | 5.8 |

Unswollen polymer particles which were added to a low gloss coating composition, and then swelled and ruptured in the low gloss coating composition, were evaluated for their effectiveness in improving delta gloss. The following procedure was used:

A low gloss coating composition was prepared according to the method for making Coating Composition A in Table 3, except that the test polymer was not swelled or ruptured until after being added to the composition. The test polymer used was prepared according to Example 19. The composition prepared was divided in two parts; and each part was neutralized with aqueous ammonia (28 weight percent active) to the pH shown in Table 10. The coating compositions were then held at room temperature for at least an hour. The two coating compositions and Control Composition A were evaluated for delta gloss according to the same procedure used for Examples 20-28 in Table 6.

Example 54 in Table 10 shows that polymer particles which are ruptured in the low gloss coating composition are effective in increasing delta gloss on a substrate coated with the composition in comparison to the Control, containing no polymer particles (Comparative Example 52). Comparative Example 53 shows that enough swelling agent must be added to the low gloss composition to swell and rupture the polymer particles in order obtain an improvement in delta gloss in comparison to the Control.

Table 10:

| Performance of Polymer Particles Neutralized in the Coating Composition | | | | | |
|---|---|---|---|---|---|
| Example | pH | 75° Sheet Gloss | 75° Print Gloss | Delta Gloss | ∆ Delta Gloss |
| 52 (Control A) | 8.0 | 30.1 | 63.8 | 33.7 | --- |
| 53 (comp) | 8.0 | 29.6 | 63.0 | 33.4 | -0.3 |
| 54 | 9.5 | 29.0 | 66.5 | 37.5 | 3.8 |

The polymer particles were evaluated for their effectiveness in maintaining or decreasing sheet gloss when applied in a low gloss coating composition to a substrate which is then calendered. Test polymers were formulated into Coating Composition A according to the method used for Examples 20-28 in Table 6. Each coating composition was then coated and calendered onto a paper substrate according to the method used for Example 20-28 in Table 6, except that a constant calendering pressure of 72 kN/m was used. The sheet gloss of each paper substrate was measured according to the procedure previously described.

Table 11 shows that the polymer particles maintain or decrease sheet gloss development in comparison to the Control, containing no test polymer (Comparative Example 55).. Table 11 also shows that hollow sphere pigments (Comparative Examples 56-58) increase sheet gloss in comparison to the Control.

Table 11:

| Development of Sheet Gloss at Constant Calender Pressure | | |
|---|---|---|
| Example | Test Polymer | 75° Sheet Gloss |
| 55 (Control A) | --- | 30.7 |
| 56(comp) | Ropaque®[10] HP-543 | 40.8 |
| 57(comp) | Ropaque OP-84 | 38.8 |
| 58 (comp) | Ropaque HP-91 | 40.1 |
| 59 | Example 4 | 28.4 |

[10] registered trademark of Rohm and Haas Company

## Claims

1. A low gloss coating composition comprising:

   one or more polymer particles; and one or more pigments;

   wherein the polymer particles comprise at least one polymer core phase containing at least one void; at least one polymer shell phase at least partially surrounding the core; and at least one channel connecting the void in the core to the exterior of the particle;
   wherein the coating composition comprises from 1.0 part by weight to 50 parts by weight of the polymer particles per 100 parts of the pigment, and wherein the coating composition has a 75° sheet gloss of 50 percent or less.

2. The low gloss coating composition of claim 1: wherein the polymer particles contain at least 0.5 weight percent of a swellable compound based on the total weight of unswollen polymer particles.

3. The low gloss coating composition of claim 1 wherein the polymer particles contain in the at least one core phase, as polymerized units, at least 5 mole percent of a monoethylenically unsaturated functional monomer having at least one functional group selected from the group consisting of a basic, acidic, and hydrolyzable group.

4. The low gloss coating composition of claim 1 wherein the polymer particles contain in the at least one core phase, as polymerized units, at least 5 mole percent of an monoethylenically unsaturated acid functional monomer.

5. The low gloss coating composition of claim 1, wherein the polymer particles contain in the at least one shell phase one or more monomers selected from the group consisting of $(C_1-C_{20})$ alkyl, $(C_1-C_{20})$ hydroxyalkyl, and $(C_3-C_{20})$ alkenyl esters of (meth)acrylic acid.

6. The low gloss coating composition of claim 1, wherein the polymer particles have a core to shell weight ratio ranging from 1:1 to 1:20.

7. The low gloss coating composition of claim 1, wherein the polymer particles have an average swollen particle size of from 200 nanometers to 2000 nanometers.

8. The low gloss coating composition of claim 1, wherein the composition is made by a process comprising:

   a) forming a mixture comprising unruptured polymer particles; wherein the unruptured polymer particles comprise at least one polymer core phase containing a swellable compound; and at least one polymer shell phase at least partially surrounding the core, and
   b) adding a swelling agent to the mixture to form at least one void in the core phase and at least one channel connecting the void in the core to the exterior of the particle.

9. A method of improving the print quality of a substrate comprising: applying the low gloss coating composition of claim 1 to the substrate.

10. The method of claim 9, wherein the print quality improved is delta gloss.

11. A method of making a low gloss coated substrate comprising: applying to a substrate the low gloss coating composition of claim 1.

12. A low gloss coated substrate produced by the method of claim 11.

**Patentansprüche**

1. Beschichtungszusammensetzung mit niedrigem Glanz, umfassend:

   ein oder mehrere Polymerpartikel und ein oder mehrere Pigmente, wobei die Polymerpartikel mindestens eine Polymerkernphase, enthaltend mindestens einen Hohlraum, mindestens eine Polymerhüllphase, die den Kern mindestens teilweise umgibt, und mindestens einen Kanal, der den Hohlraum in dem Kern mit dem Äußeren des Partikels verbindet, umfasst; wobei die Beschichtungszusammensetzung umfasst von 1,0 Gewichtsteile bis 50 Gewichtsteile der Polymerpartikel pro 100 Teile des Pigments und wobei die Beschichtungszusammensetzung einen 75°-Sheet-Glanz von 50 Prozent oder weniger hat.

2. Beschichtungszusammensetzung mit niedrigem Glanz gemäß Anspruch 1, wobei die Polymerpartikel mindestens 0,5 Gewichtsprozent einer quellbaren Verbindung, bezogen auf das Gesamtgewicht von ungequollenen Polymerpartikeln, enthalten.

3. Beschichtungszusammensetzung mit niedrigem Glanz gemäß Anspruch 1, wobei die Polymerpartikel in der mindestens einen Kernphase als polymerisierte Einheiten mindestens 5 Mol-% eines monoethylenisch ungesättigten funktionalen Monomers mit mindestens einer funktionalen Gruppe, ausgewählt aus der Gruppe, bestehend aus einer basischen, sauren und hydrolisierbaren Gruppe, enthalten.

**4.** Beschichtungszusammensetzung mit niedrigem Glanz nach Anspruch 1, wobei die Polymerpartikel in der mindestens einen Kernphase als polymerisierte Einheiten mindestens 5 Mol-% eines monoethylenisch ungesättigten Säure-funktionalen Monomers enthalten.

**5.** Beschichtungszusammensetzung mit niedrigem Glanz nach Anspruch 1, wobei die Polymerpartikel in der mindestens einen Hüllphase ein oder mehrere Monomere, ausgewählt aus der Gruppe, bestehend aus $(C_1-C_{20})$-Alkyl-, $(C_1-C_{20})$-Hydroxyalkyl- und $(C_3-C_{20})$-Alkenylestern von (Meth)Acrylsäure, enthalten.

**6.** Beschichtungszusammensetzung mit niedrigem Glanz nach Anspruch 1, wobei die Polymerpartikel ein Gewichtsverhältnis von Kern zu Hülle haben im Bereich von 1:1 bis 1:20.

**7.** Beschichtungszusammensetzung mit niedrigem Glanz nach Anspruch 1, wobei die Polymerpartikel eine durchschnittliche gequollene Partikelgröße von 200 Nanometer bis 2000 Nanometer haben.

**8.** Beschichtungszusammensetzung mit niedrigem Glanz nach Anspruch 1, wobei die Zusammensetzung durch ein Verfahren hergestellt wird, umfassend:

a) Bilden eines Gemisches, umfassend ungebrochene Polymerpartikel, wobei die ungebrochenen Polymerpartikel mindestens eine Polymerkernphase, enthaltend eine quellbare Verbindung, und mindestens eine Polymerhüllphase, die den Kern zumindest teilweise umgibt, umfassen und
b) Zugeben eines Quellmittels zu dem Gemisch, um mindestens einen Hohlraum in der Kernphase und mindestens einen Kanal, der den Hohlraum in dem Kern mit dem Äußeren des Partikels verbindet, zu bilden.

**9.** Verfahren zur Verbesserung der Druckqualität eines Substrats, umfassend das Aufbringen der Beschichtungszusammensetzung mit niedrigem Glanz gemäß Anspruch 1 auf das Substrat.

**10.** Verfahren nach Anspruch 9, wobei die Verbesserung der Druckqualität Delta-Glanz ist.

**11.** Verfahren zur Herstellung eines mit niedrigem Glanz beschichteten Substrats, umfassend das Aufbringen der Beschichtungszusammensetzung mit niedrigem Glanz nach Anspruch 1 auf ein Substrat.

**12.** Ein mit niedrigem Glanz beschichtetes Substrat hergestellt durch ein Verfahren nach Anspruch 11.

**Revendications**

**1.** Composition de revêtement à faible brillant, comprenant :

une ou plusieurs particules polymères ; et un ou plusieurs pigments ;

où les particules polymères comprennent au moins une phase polymère de coeur contenant au moins une cavité ; au moins une phase polymère de gaine qui entoure au moins partiellement le coeur ; et au moins un canal qui relie la cavité se trouvant dans le coeur à l'extérieur de la particule ;
où la composition de revêtement comprend de 1,0 partie en poids à 50 parties en poids des particules polymères pour 100 parties en poids du pigment, et où la composition de revêtement présente un brillant de feuille à 75°C de 50 % ou moins.

**2.** Composition de revêtement à faible brillant selon la revendication 1, dans laquelle les particules polymères contiennent au moins 0,5 % en poids d'un composé pouvant gonfler, par rapport au poids total des particules polymères non gonflées.

**3.** Composition de revêtement à faible brillant selon la revendication 1, dans laquelle les particules polymères contiennent dans la ou les phases de coeur, en tant que motifs polymérisés, au moins 5 % en moles d'un monomère fonctionnel à insaturation monoéthylénique ayant au moins un groupe fonctionnel choisi dans l'ensemble comprenant les groupes basiques, acides et hydrolysables.

**4.** Composition de revêtement à faible brillant selon la revendication 1, dans laquelle les particules polymères contiennent, dans la ou les phases de coeur, en tant que motifs polymérisés, au moins 5 % en moles d'un monomère à fonctionnalité acide à insaturation monoéthylénique.

5. Composition de revêtement à faible brillant selon la revendication 1, dans laquelle les particules polymères contiennent, dans la ou les phases de gaine, un ou plusieurs monomères choisis dans l'ensemble comprenant les esters alkyliques en $C_1$-$C_{20}$, hydroxyalkyliques en $C_1$-$C_{20}$ et alcényliques en $C_3$-$C_{20}$ de l'acide (méth)acrylique.

6. Composition de revêtement à faible brillant selon la revendication 1, dans laquelle les particules polymères présentent un rapport pondéral du coeur à la gaine compris entre 1:1 et 1:20.

7. Composition de revêtement à faible brillant selon la revendication 1, dans laquelle les particules polymères ont une granulométrie moyenne après gonflement comprise entre 200 et 2000 nanomètres.

8. Composition de revêtement à faible brillant selon la revendication 1, dans laquelle la composition est préparée par un procédé comprenant :

a) la formation d'un mélange comprenant des particules polymères non rompues ; où les particules polymères non rompues comprennent au moins une phase polymère de coeur contenant un composé pouvant gonfler, et au moins une phase polymère de gaine entourant au moins partiellement le coeur, et
b) l'addition d'un agent gonflant au mélange pour former au moins une cavité dans la phase de coeur et au moins un canal qui relie la cavité se trouvant dans le coeur à l'extérieur de la particule.

9. Procédé pour améliorer la qualité d'impression d'un substrat, qui comprend l'application d'une composition de revêtement à faible brillant selon la revendication 1 sur le substrat.

10. Procédé selon la revendication 9, dans lequel la qualité d'impression telle qu'améliorée est le brillant delta.

11. Procédé pour réaliser un substrat revêtu et ayant un faible brillant, qui comprend l'application, au substrat, de la composition de revêtement à faible brillant selon la revendication 1.

12. Substrat revêtu et ayant un faible brillant, produit par le procédé selon la revendication 11.